## Europäisches Patentamt

## European Patent Office

## Office européen des brevets

(19)

(11) **EP 0 936 978 B1**

(12) **EUROPÄISCHE PATENTSCHRIFT**

(45) Veröffentlichungstag und Bekanntmachung des Hinweises auf die Patenterteilung:
**29.03.2000  Patentblatt 2000/13**

(51) Int Cl.$^7$: **B60K 23/08**

(21) Anmeldenummer: **97951882.6**

(86) Internationale Anmeldenummer:
**PCT/EP97/06271**

(22) Anmeldetag: **11.11.1997**

(87) Internationale Veröffentlichungsnummer:
**WO 98/22302 (28.05.1998 Gazette 1998/21)**

(54) **ANTRIEBSSTEUERUNG**

DRIVE CONTROL

COMMANDE D'ENTRAINEMENT

(84) Benannte Vertragsstaaten:
**AT DE FR GB IT**

(30) Priorität: **16.11.1996  DE 19647507**

(43) Veröffentlichungstag der Anmeldung:
**25.08.1999  Patentblatt 1999/34**

(73) Patentinhaber: **ZF FRIEDRICHSHAFEN Aktiengesellschaft**
**88038 Friedrichshafen (DE)**

(72) Erfinder: **SALG, Ditmar**
**D-94121 Salzweg (DE)**

(56) Entgegenhaltungen:
**EP-A- 0 521 275      DE-A- 3 636 260**
**DE-A- 3 721 622      DE-A- 3 721 628**

## Beschreibung

Die Erfindung betrifft eine Antriebssteuerung für Kraftfahrzeuge, insbesondere für land- und forstwirtschaftliche Nutzfahrzeuge. Diese Antriebssteuerung bewirkt die Zuschaltung oder Abschaltung von weiteren Antriebsachsen neben den ständig angetriebenen Achsen. Fahrzeuge, bei denen zusätzliche Antriebsachsen zugeschaltet werden können, sind bekannt, insbesondere im Pkw und Nkw Bereich. Die deutsche Offenlegungsschrift 35 05 455 zeigt eine Antriebssteuerung zum automatischen Zu- und Abschalten von Antriebsachsen auf. Neben anderen Kriterien ist der momentan auftretende Schlupf das Hauptkriterium zum Zu- und Abschalten des Allradantriebs. Überschreitet der Schlupf der angetriebenen Achse einen Grenzwert, wird der Allradantrieb zugeschaltet. Unterschreitet er einen Grenzwert, wird der Allradantrieb wieder abgeschaltet. Mit einer Reihe unterschiedlicher Einflußfaktoren beschreibt diese Schrift eine komplizierte Antriebssteuerung. Nachteilig an dieser Antriebssteuerung ist aber, daß die Schlupfgrenzwerte zwar abhängig von Betriebszuständen, wie z. B. der Fahrgeschwindigkeit, aber willkürlich festgelegt werden. Vermeidbar auftretender Schlupf ist stets mit erhöhter Abnutzung und Treibstoffverbrauch verbunden. Insbesondere bei landwirtschaftlichen Nutzfahrzeugen ist ein Schlupfen der Räder nach Möglichkeit zu vermeiden, da dadurch der Ackerboden oder die Grasnarbe beschädigt werden. Dies führt zu einer Ertragsminderung. Um den Boden zu schonen und seine Beschädigung möglichst gering zu halten, muß die in den Boden dissipierte Leistung minimiert werden, d. h. der Wirkungsgrad des Antriebsstrang maximiert werden.

Der Erfindung liegt die Aufgabe zugrunde, eine Antriebssteuerung zu schaffen, die durch Zu- oder Abschalten von zusätzlichen Antriebsachsen die Verlustleistung im Antriebsstrang durch Schlupf minimiert, d. h. den Fahrwerkwirkungsgrad maximiert.

Diese Aufgabe wird mit einer, auch die kennzeichnenden Merkmale des Hauptanspruchs aufweisenden gattungsgemäßen Antriebssteuerung gelöst.

Dabei bestimmt die Antriebssteuerung, ob bei Kraftoder Nutzfahrzeugen mit mindestens einer angetriebenen Achse und mindestens einer weiteren zuschaltbaren Antriebsachse, letztere zugeschaltet wird oder aus den Antriebsstrang abgeschaltet wird oder bleibt. Dazu werden die Fahrwerkwirkungsgrade mit und ohne zugeschaltete Antriebsachse oder Antriebsachsen berechnet und miteinander verglichen. Liegt der Fahrwerkwirkungsgrad mit zugeschalteter Antriebsachse oder zugeschalteten Antriebsachsen höher als ohne zugeschalteten Antriebsachsen so werden diese zugeschaltet, anderenfalls nicht. Der Fahrwerkwirkungsgrad ist definiert durch den Quotient aus Antriebsleistung zu Gesamtleistung. Aus diesem Ansatz werden unter bestimmten Voraussetzungen und Vereinfachungen in einem physikalischen Modell mathematische Formeln aufgestellt, mittels derer der numerische Wert des Fahrwerkwirkungsgrades berechnet wird. In die Berechnungsformeln für die Fahrwerkwirkungsgrade gehen Größen wie Gewichtskräfte auf die Achsen, die Triebkraft- und Rollreibungsbeiwerte, die Radumfangsgeschwindigkeiten, das Verhältnis der Bahngeschwindigkeiten der einzelnen Räder bedingt durch Kurvenfahrten, das unter anderem vom Lenkwinkel abhängig ist, und der Radschlupf ein. Das Fahrwerk verfügt über mindestens zwei Drehzahlsensoren an einer gelenkten Achse und mindestens einem Drehzahlsensor an einer angetriebenen Achse. Aus den Raddrehzahlverhältnissen der gelenkten Achse bei nicht zugeschaltetem Antrieb kann der Lenkwinkel errechnet werden. Alternativ dazu kann der Lenkwinkel über einen Lenkwinkelsensor bestimmt werden. Beide Methoden können wahlweise oder in Kombination angewandt werden. Über den Lenkwinkel wird das theoretische Verhältnis der Radumfangsgeschwindigkeiten ohne Schlupf der einzelnen Achsen untereinander bestimmt. Der Schlupf an der oder den angetriebenen Achsen ergibt sich dann aus dem Vergleich von dem theoretischen Verhältnis der Radumfangsgeschwindigkeiten mit den über die Drehzahlsensoren bestimmten tatsächlichen Umfangsgeschwindigkeiten der Räder der angetriebenen und nicht angetriebenen Achsen. Wenn im Folgenden von den Geschwindigkeiten der Räder einer Achse die Rede sein wird, so ist bei der Nennung von nur einer Geschwindigkeit pro Achse immer die mittlere Geschwindigkeit der Räder dieser Achse gemeint. Für bestimmte Standarduntergrundbedingungen lassen sich die funktionalen Abhängigkeiten der Triebkraft- und Rollreibungsbeiwerte von dem Schlupf in Kennlinien in einer elektronischen Steuereinheit ablegen. Mit Hilfe dieser Kennlinien lassen sich diese Beiwerte aus den auf obige Weise ermittelten Schlupfwerten bestimmen. Aus diesen Beiwerten, dem Lenkwinkel, der vorgegebenen oder gemessenen Achslastverteilung und dem Schlupf wird der Fahrwerkwirkungsgrad bei der oder den ständig angetriebenen Achsen berechnet. Über eine weitere mathematische Beziehung und weitere Kennlinien wird der Fahrwerkwirkungsgrad bei Antrieb durch einesteils diese ständig angetriebene Achse oder ständig angetriebenen Achsen und anderesteils eine oder mehrere weitere zugeschaltete Triebachsen berechnet. Für den Fall, daß alle Achsen des Kraftfahrzeuges angetrieben werden, kann der Schlupf nicht auf obige Weise durch den Vergleich von dem theoretischen Verhältnis der Radumfangsgeschwindigkeiten mit den tatsächlichen Umfangsgeschwindigkeiten der Räder der angetriebenen und nicht angetriebenen Achsen bestimmt werden, da es in diesem Fall keine nicht angetriebenen Achsen gibt, über die die tatsächliche Fahrzeuggeschwindigkeit bestimmt werden kann. Der Schlupf, der bei Allradantrieb zu erwarten ist, muß daher auf andere Weise bestimmt werden. Die Bedingung, daß die Zugkraft des Kraft- oder Nutzfahrzeuges bei Antrieb durch die ständig angetriebene Achse oder Achsen und bei Allradantrieb gleich sein soll, legt den in die Berechnung für den Wirkungsgrad des Fahrwerkes bei Allradantrieb eingehenden Gesamtschlupfwert und die Triebkraft- und Rollreibungsbeiwerte fest. Der Zusammenhang zwischen Schlupf bei Allradantrieb und Triebkraft- und Rollreibungsbeiwerten bei Allradantrieb ist dabei wieder in Kennlinien abgelegt. Wie oben bereits erwähnt, wird als Zuschaltkriterium für die zusätzliche oder zusätzlichen Triebachsen das Verhältnis der errechneten Fahrwerkwirkungsgrade herangezogen, wobei für positiven Schlupf bei einem Quotient der Fahrwerkwirkungsgrade von einerseits mit zugeschalteter oder zugeschalteten Triebachsen andererseits ohne zugeschaltete Triebachsen von größer gleich 1 das Zuschaltkriterium erfüllt ist. Für negativen Schlupf, d. h. Schubschlupf ist das Zuschaltkriterium ein Quotient der Fahrwerkwirkungsgrade von einerseits mit zugeschalteter oder zugeschalteten Triebachsen andererseits ohne zugeschaltete Triebachsen von kleiner 1. Diese Berechnung beinhaltet insoweit eine gewisse Fehlergröße, als die Bodenbeschaffenheit, die sich in den Kennlinien für Triebkraft- und Rollreibungsbeiwert ausdrückt, als Standardbodenbeschaffenheit angenommen wird und nicht der tatsächlichen entspricht. Es zeigt sich aber aus der Analyse der numerischen Daten im Versuch, daß der Quotient der Fahrwerkwirkungsgrade weitgehend unabhängig von der Bodenbeschaffenheit ist.

In einer vorteilhaften Ausgestaltung der Erfindung wird die Hinterachse ständig angetrieben und die Vorderachse kann als Triebachse zugeschaltet werden. Der Quotient der Fahrwerkwirkungsgrade von Allrad- und Hinterradantrieb

$$\frac{\eta_A}{\eta_H}$$

wird als Zuschaltkriterium des Allradantriebs herangezogen, wobei für Hinterradschlupf $i_H \geq 0$ $\frac{\eta_A}{\eta_H} \geq 0$ gilt und für Hinterradschlupf $i_H \leq 0$ $\frac{\eta_A}{\eta_H} < 0$ gilt.

Der Fahrwerkwirkungsgrad $\eta_H$ für Hinterradantrieb ist durch den Quotienten aus der Radzugleistung $P_T$ des gesamten Fahrwerks und der Radnabenleistung $P_{N\_H}$ der angetriebenen Hinterachse gegeben,

$$\eta_H = \frac{P_T}{P_{N\_H}}$$

wobei sich die Radzugleistung $P_T$ aus der Radzugleistung $P_{T\_H}$ der Hinterachse und der Rollreibungsverlustleistung $P_{R\_V}$ der Vorderachse zusammensetzt:

$$\eta_H = \frac{P_{T\_H} - P_{R\_V}}{P_{N\_H}}$$

Die Radzugleistung $P_{T\_H}$ der Hinterachse ist das Produkt aus der Radzugkraft $F_{T\_H}$ der Hinterachse und der Geschwindigkeit $v_H$ der Hinterachse über Grund. Die Rollreibungsverlustleistung $P_{R\_V}$ der Vorderachse ist das Produkt aus der Rollreibungskraft $F_{R\_V}$ der Vorderachse und der Geschwindigkeit $v_V$ der Vorderachse über Grund. Diese Geschwindigkeit $v_V$ ist aufgrund der unterschiedlichen Weglängen, die die Räder der Vorderachse und die der Hinterachse bei der Kurvenfahrt abrollen, verschieden von der Geschwindigkeit $v_H$ der Hinterachse. Die Radnabenleistung $P_{N\_H}$ der angetriebenen Hinterachse ist das Produkt aus Radumfangskraft $F_{U\_H}$ und Radumfangsgeschwindigkeit $v_{0\_H}$ der Hinterachse. Radumfangsgeschwindigkeit $v_{0\_H}$ ist durch das Produkt aus Winkelgeschwindigkeit des Rades und Radius des Rades definiert. Damit ergibt sich für den Fahrwerkwirkungsgrad $\eta_H$ für Hinterradantrieb:

$$\eta_H = \frac{F_{T\_H} v_H - F_{R\_V} v_V}{F_{U\_H} v_{0\_H}}$$

Die Radzugkraft $F_{T\_H}$ der Hinterachse ist über den Triebkraft- oder Kraftschlußbeiwert $\kappa_{h\_H}$ bei Hinterradantrieb als Proportionalitätsfaktor mit dem Hinterachsanteil der Gewichtskraft $F_{Gh}$ des Fahrzeuges verbunden. In analoger Weise ist die Rollreibungskraft $F_{R\_V}$ der Vorderachse über den Rollreibungsbeiwert $\rho_v$ der Vorderachse bei Hinterradantrieb dem Vorderachsanteil der Gewichtskraft $F_{Gv}$ des Fahrzeuges proportional. Die Radumfangskraft $F_{U\_H}$ ist das Produkt aus der Summe von Triebkraftbeiwert $\kappa_{h\_H}$ bei Hinterradantrieb und Rollreibungsbeiwert $\rho_{h\_H}$ der Hinterachse bei Hinterradantrieb und dem Hinterachsanteil der Gewichtskraft $F_{Gh}$ des Fahrzeuges. Damit läßt sich der Fahrwerkwirkungsgrad $\eta_H$ für Hinterradantrieb folgendermaßen ausdrücken:

$$\eta_H = \frac{\kappa_{h\_H} F_{Gh} v_H - \rho_v\, F_{Gv} v_V}{(\kappa_{h\_H} + \rho_{h\_H}) F_{Gh} v_{0\_H}}$$

Ist die Radumfangsgeschwindigkeit $v_{0\_H}$ der Hinterachse größer als die Geschwindigkeit $v_H$ der Hinterachse über Grund so ist der Radschlupf ein Zugschlupf oder positiver Schlupf. Der mittlere Schlupf $i_H$ der Hinterräder des Fahrzeuges bei Hinterradantrieb ist dann folgendermaßen definiert:

$$i_H = 1 - \frac{v_H}{v_{0\_H}}$$

Mit dieser Definition läßt sich die Geschwindigkeit $v_H$ der Hinterachse über Grund durch den mittleren Schlupf $i_H$ der Hinterräder und die Radumfangsgeschwindigkeit $v_{0\_H}$ der Hinterachse folgendermaßen ausdrücken:

$$v_H = (1 - i_H) v_{0\_H}$$

Die Geschwindigkeit $v_V$ ist - wie oben bereits erwähnt - aufgrund der unterschiedlichen Weglängen, die die Räder der Vorderachse und die der Hinterachse bei der Kurvenfahrt abrollen, verschieden von der Geschwindigkeit $v_H$ der Hinterachse. Führt man die Größe $s$ als das Verhältnis der mittleren Bahngeschwindigkeiten der Vorderräder und Hinterräder ein, so läßt sich die Geschwindigkeit $v_V$ durch die Geschwindigkeit $v_H$ der Hinterachse ausdrücken

$$v_V = s v_H$$

und über die obige Beziehung durch den Schlupf $i_H$ der Hinterräder und die Radumfangsgeschwindigkeit $v_{0\_H}$ der Hinterachse folgendermaßen schreiben:

$$v_V = s(1 - i_H) v_{0\_H}$$

Mit Hilfe dieser Beziehungen ergibt sich für den Fahrwerkwirkungsgrad bei Hinterradantrieb für positiven Schlupf folgende Formel:

$$\eta_H = \frac{\kappa_{h\_H} - s\rho_v \dfrac{F_{Gv}}{F_{Gh}}}{\kappa_{h\_H} + \rho_{h\_H}} * (1 - i_H)$$

Die Herleitung der mathematischen Beziehungen für den Fahrwerkwirkungsgrad bei Allradantrieb für positiven Schlupf erfolgt in analoger Weise.

Der Fahrwerkwirkungsgrad $\eta_A$ für Allradantrieb ist durch den Quotienten aus der Radzugleistung $P_T$ des gesamten Fahrwerks und der Radnabenleistung $P_{N\_A}$ der angetriebenen Achse gegeben,

$$\eta_A = \frac{P_T}{P_{N\_A}}$$

wobei sich die Radzugleistung $P_T$ hier im Fall des Allradantriebs aus der Radzugleistung $P_{T\_H}$ der Hinterachse und der Radzugleistung $P_{T\_V}$ der Vorderachse zusammensetzt:

$$\eta_A = \frac{P_{T\_H} + P_{T\_V}}{P_{N\_A}}$$

Die Radzugleistung $P_{T\_H}$ der Hinterachse ist das Produkt aus der Radzugkraft $F_{T\_H}$ der Hinterachse und der Geschwindigkeit $v_H$ der Hinterachse über Grund. Analog ist die Radzugleistung $P_{T\_V}$ der Vorderachse das Produkt aus der Radzugkraft $F_{T\_V}$ der Vorderachse und der Geschwindigkeit $\nu_V$ der Vorderachse über Grund.

Diese Geschwindigkeit $\nu_V$ ist - wie beim Hinterradantrieb - aufgrund der unterschiedlichen Weglängen, die die Räder der Vorderachse und die der Hinterachse bei der Kurvenfahrt abrollen, verschieden von der Geschwindigkeit $\nu_H$ der Hinterachse. Die Radnabenleistung $P_{N\_A}$ der angetriebenen Hinter- und Vorderachsen ist die Summe des Produktes aus Radumfangskraft $F_{U\_H}$ und Radumfangsgeschwindigkeit $\nu_{0\_H}$ der Hinterachse und des Produktes aus Radumfangskraft $F_{U\_V}$ und Radumfangsgeschwindigkeit $\nu_{0\_V}$ der Vorderachse. Radumfangsgeschwindigkeiten $\nu_{0\_H}$ und $\nu_{0\_V}$ sind jeweils durch das Produkt aus Winkelgeschwindigkeit des Rades und Radius des Rades definiert.

Damit ergibt sich für den Fahrwerkwirkungsgrad $\eta_A$ für Allradantrieb:

$$\eta_A = \frac{F_{T\_H}\nu_H + F_{T\_V}\nu_V}{F_{U\_H}\nu_{0\_H} + F_{U\_V}\nu_{0\_V}}$$

Die Radzugkraft $F_{T\text{-}H}$ der Hinterachse ist über den Triebkraft- oder Kraftschlußbeiwert $\kappa_{h\_A}$ der Hinterachse bei Allradantrieb als Proportionalitätsfaktor mit dem Hinterachsanteil der Gewichtskraft $F_{Gh}$ des Fahrzeuges verbunden. In analoger Weise ist die Radzugkraft $F_{T\_V}$ der Vorderachse über den Triebkraft- oder Kraftschlußbeiwert $\kappa_{v\_A}$ der Vorderachse bei Allradantrieb als Proportionalitätsfaktor mit dem Vorderachsanteil der Gewichtskraft $F_{Gv}$ des Fahrzeuges verbunden. Die Radumfangskraft $F_{U\_H}$ der Hinterachse ist das Produkt aus der Summe von Triebkraftbeiwert $\kappa_{h\_A}$ der Hinterachse bei Allradantrieb und Rollreibungsbeiwert $\rho_{h\_A}$ der Hinterachse bei Allradantrieb und dem Hinterachsanteil der Gewichtskraft $F_{Gh}$ des Fahrzeuges. Analog dazu ist die Radumfangskraft $F_{U\_V}$ der Vorderachse das Produkt aus der Summe von Triebkraftbeiwert $\kappa_{v\_A}$ der Vorderachse bei Allradantrieb und Rollreibungsbeiwert $\rho_{v\_A}$ der Vorderachse bei Allradantrieb und dem Vorderachsanteil der Gewichtskraft $F_{Gv}$ des Fahrzeuges. Damit läßt sich der Fahrwerkwirkungsgrad $\eta_A$ für Allradantrieb folgendermaßen ausdrücken:

$$\eta_A = \frac{\kappa_{h\_A}F_{Gh}\nu_H + \kappa_{v\_A}F_{Gv}\nu_V}{(\kappa_{h\_A} + \rho_{h\_A})F_{Gh}\nu_{0\_H} + (\kappa_{v\_A} + \rho_{v\_A})F_{Gv}\,\nu_{0\_V}}$$

Sind die Radumfangsgeschwindigkeiten $\nu_{0\_H}$ und $\nu_{0\_V}$ der Hinter- und Vorderachse größer als die Geschwindigkeit $\nu_H$ und $\nu_V$ der Hinterachse über Grund so ist der Radschlupf ein Zugschlupf oder positiver Schlupf. Der mittlere Schlupf $i_A$ der Hinterräder des Fahrzeuges bei Allradantrieb ist dann folgendermaßen definiert:

$$i_A = 1 - \frac{\nu_H}{\nu_{0\_H}}$$

Mit dieser Definition läßt sich die Geschwindigkeit $\nu_H$ der Hinterachse über Grund durch den mittleren Schlupf $i_A$ der Hinterräder bei Allradantrieb und die Radumfangsgeschwindigkeit $\nu_{0\_H}$ der Hinterachse folgendermaßen ausdrücken:

$$\nu_H = (1 - i_A)\nu_{0\_H}$$

Die Geschwindigkeit $\nu_V$ ist - wie oben bereits erwähnt - aufgrund der unterschiedlichen Weglängen, die die Räder der Vorderachse und die der Hinterachse bei der Kurvenfahrt abrollen, verschieden von der Geschwindigkeit $\nu_H$ der Hinterachse. Führt man die Größe $s$ als das Verhältnis der mittleren Bahngeschwindigkeiten der Vorderräder und Hinterräder ein, so läßt sich die Geschwindigkeit $\nu_V$ durch die Geschwindigkeit $\nu_H$ der Hinterachse ausdrücken:

$$\nu_V = s\nu_H$$

Über die obige Beziehung läßt sich die Geschwindigkeit $\nu_V$ der Vorderachse über Grund durch den Schlupf $i_A$ der Hinterräder bei Allradantrieb und die Radumfangsgeschwindigkeit $\nu_{0\_H}$ der Hinterachse folgendermaßen schreiben:

$$\nu_V = s(1 - i_A)\nu_{0\_H}$$

Die Räder der Hinter- und Vorderachse müssen nicht notwendiger Weise mit der selben Geschwindigkeit angetrieben werden. Insbesondere bei Kurvenfahrt ist es sinnvoll, die Räder der Vorderachse schneller anzutreiben als die der Hinterachse, da sie einen weiteren Weg zurückzulegen haben. Das bedeutet, daß das Verhältnis **e** der mittleren Antriebsgeschwindigkeiten der Vorderräder und Hinterräder nicht notwendiger Weise immer gleich 1 ist. Die Radumfangsgeschwindigkeit $v_{0\_V}$ der Vorderachse läßt sich damit durch die Radumfangsgeschwindigkeit $v_{0\_H}$ der Hinterachse ausdrücken:

$$v_{0\_V} = e v_{0\_H}$$

Mit Hilfe dieser Beziehungen ergibt sich für den Fahrwerkwirkungsgrad bei Allradantrieb für positiven Schlupf folgende Formel:

$$\eta_A = \frac{\kappa_{h\_A} + s\kappa_{v\_A}\dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * (1 - i_A)$$

Sind die Radumfangsgeschwindigkeiten $v_{0\_H}$ und $v_{0\_V}$ der Hinter- und Vorderachse kleiner als die Geschwindigkeit $v_H$ und $v_V$ der Hinterachse über Grund so ist der Radschlupf ein Schubschlupf oder negativer Schlupf. Der mittlerer Schlupf $i_H$ der Hinterräder des Fahrzeuges bei Hinterradantrieb ist in diesem Fall folgendermaßen definiert:

$$i_H = \frac{v_{0\_H}}{v_H} - 1$$

Nach dieser Definition gilt analog für den mittlerer Schlupf $i_A$ der Hinterräder des Fahrzeuges bei Allradantrieb:

$$i_A = \frac{v_{0\_H}}{v_H} - 1$$

Für negativen Schlupf ändert sich damit obige Beziehung fü den Fahrwerkwirkungsgrad bei Hinterradradantrieb folgender maßen ab:

$$\eta_H = \frac{\kappa_{h\_H} - s\rho_v\dfrac{F_{Gv}}{F_{Gh}}}{\kappa_{h\_H} + \rho_{h\_H}} * \frac{1}{1 + i_H}$$

Für den Fahrwerkwirkungsgrad bei Allradantrieb gilt für negativen Schlupf die Beziehung:

$$\eta_A = \frac{\kappa_{h\_A} + s\kappa_{v\_A}\dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * \frac{1}{1 + i_A}$$

Wie oben bereits erwähnt, bezeichnen die Symbole dabei:

$\eta_H$     Fahrwerkwirkungsgrad bei Hinterradantrieb
$\eta_A$     Fahrwerkwirkungsgrad bei Allradantrieb
$\kappa_{h\_H}$     Triebkraftbeiwert der Hinterachse bei Hinterradantrieb
$\kappa_{h\_A}$     Triebkraftbeiwert der Hinterachse bei Allradantrieb
$\kappa_{v\_A}$     Triebkraftbeiwert der Vorderachse bei Allradantrieb

$s$      Verhältnis der mittleren Bahngeschwindigkeiten der Vorderräder und Hinterräder

$\rho v$      Rollreibungsbeiwert der Vorderachse bei Hinterradantrieb

$\rho_{h\_H}$      Rollreibungsbeiwert der Hinterachse bei Hinterradantrieb

$\rho_{h\_A}$      Rollreibungsbeiwert der Hinterachse bei Allradantrieb

$F_{Gv}$      Vorderachsanteil der Gewichtskraft des Fahrzeuges

$F_{Gh}$      Hinterachsanteil der Gewichtskraft des Fahrzeuges

$i_H$      mittlerer Schlupf der Hinterräder des Fahrzeuges bei Hinterradantrieb

$i_A$      mittlerer Schlupf der Hinterräder des Fahrzeuges bei Allradantrieb

$e$      Verhältnis der mittleren Antriebsgeschwindigkeiten der Vorderräder und Hinterräder.

Das Verhältnis s der mittleren Bahngeschwindigkeiten der Vorderräder und Hinterräder kann dabei über die Beziehung

$$s = \frac{1}{\cos\langle\delta_v\rangle}$$

bestimmt werden,
mit

$\langle\delta_v\rangle$      mittlere Lenkwinkel der Räder der Vorderachse.

Der in die Formel für den Fahrwerkwirkungsgrad $\eta_H$ bei Hinterradantrieb eingehende mittlere Schlupf $i_H$ der Hinterräder wird gemessen, indem das den Lenkeinschlag berücksichtigende theoretische Verhältnis der Radumfangsgeschwindigkeiten von Vorder- zu Hinterachse mit dem über die Drehzahlsensoren bestimmten tatsächlichen Umfangsgeschwindigkeitsverhältnis der Räder der Vorder- zu Hinterachsen verglichen wird. Dabei wird mit den nicht angetriebenen Vorderrädern die Geschwindigkeit der Vorderräder über Grund gemessen und über den Lenkwinkel die der Hinterräder über Grund berechnet. Bei Allradantrieb kann der Schlupf nicht auf obige Weise durch den Vergleich von dem theoretischen Verhältnis der Radumfangsgeschwindigkeiten mit den tatsächlichen Umfangsgeschwindigkeitsverhältnis der Räder der Hinterachse und Vorderachse bestimmt werden, da in diesem Fall die Vorderräder nicht ungetrieben mitlaufen und damit die Geschwindigkeit über Grund nicht messen können. Der Schlupf, der bei Zuschaltung des Allradantriebs zu erwarten ist, muß daher auf andere Weise bestimmt werden. Die Bedingung, daß die Zugkraft des Kraft- oder Nutzfahrzeuges bei Hinterradantrieb und bei Allradantrieb gleich sein soll, legt den in die Berechnung für den Wirkungsgrad des Fahrwerkes bei Allradantrieb eingehenden Schlupfwert und die Triebkraft- und Rollreibungsbeiwerte für Allradantrieb fest. Wie oben bereits erwähnt, lassen sich für bestimmte Standioruntergrundbedingungen die funktionalen Abhängigkeiten der Triebkraft- und Rollreibungsbeiwerte von dem Schlupf in Kennlinien in einer elektronischen Steuereinheit ablegen. Dies gilt für Hinterrad wie für Allradantrieb. Über die der Forderung "gleiche Zugkraft bei Hinterradantrieb wie bei Allradantrieb" entsprechende mathematische Beziehung

$$\kappa_{h\_A} + \kappa_{v\_A}\,\frac{F_{Gv}}{F_{Gh}} = \kappa_{h\_H} - s\rho_v\,\frac{F_{Gv}}{F_{Gh}}$$

werden der Schlupfwert, die Triebkraft- und Rollreibungsbeiwerte für Allradantrieb bestimmt. Da die funktionale Abhängigkeit der Triebkraft- und Rollreibungsbeiwerte ja unter Annahme von Standardbedingungen in Kennlinien vorgegeben sind, hat die obige Gleichung nur eine einzige Unbestimmte, den Schlupfwert bei Allradantrieb, und kann gelöst werden.

Als Zuschaltkriterium des Allradantriebs wird der Quotient

$$\frac{\eta_A}{\eta_H}$$

herangezogen.

Für Zugschlupf, d. h für positiven Schlupf, d.h. für $i_H > 0$      gilt      $\frac{\eta_A}{\eta_H} \geq 1$ und für Schubschlupf, d. h. für negativen Schlupf d. h. $i_H < 0$      gilt      $\frac{\eta_A}{\eta_H} < 1$ Das Zuschaltkriterium im letzteren Fall dient zum Entlasten der Betriebsbremse.

Wie bereits oben angesprochen, beinhaltet diese Berechnung insoweit eine gewisse Fehlergröße, als die Bodenbeschaffenheit, die sich in den Kennlinien für Triebkraftund Rollreibungsbeiwert ausdrückt, als Standardbodenbeschaffenheit angenommen wird und nicht der tatsächlichen entspricht. Es zeigt sich aber aus der Analyse der numerischen Daten im Versuch, daß der Quotient der Fahrwerkwirkungsgrade weitgehend unabhängig von der Bodenbeschaffenheit ist.

In einer vorteilhaften Ausgestaltung der Erfindung wird oder werden nach dem Zuschalten von einer oder mehreren weiteren Antriebsachsen nach einer definierten Zeit diese Achse oder Achsen wieder aus dem Antriebsstrang abgeschaltet, um erneut zu überprüfen, ob das Zuschaltkriterium noch erfüllt ist. Nach dem Abschalten kann mittels der nicht angetriebenen Achsen, deren Räder nur mitgeführt werden, wieder die Geschwindigkeit über Grund dieser Räder bestimmt werden. Über die Lenkwinkel-abhängigen Längenverhältnisse der Radablaufspuren wird damit von Neuem die Geschwindigkeit über Grund der angetriebenen Räder berechnet. Der oben beschriebene Ablauf zur Prüfung des Zuschaltkriteriums erfolgt erneut.

Vorzugsweise wird das Zuschaltkriterium erneut überprüft, wenn der Lenkwinkel sich um einen definierten Mindestbetrag ändert. Ändert sich der Lenkwinkel, so ändert sich damit das Verhältnis der Spurlängen der Räder der Vorder- und Hinterachse. Damit ändert sich auch der Schlupf der einzelnen Räder und damit die Triebkraft- und Rollreibungsbeiwerte. Letztlich führt dies zu anderen Fahrwerkwirkungsgraden. Um dies an einem Beispiel zu verdeutlichen, ein Ackerschlepper mit Zuglast in Geradeausfahrt auf ebener Strecke wird bei Allradantrieb an allen vier Rädern einen Zugschlupf ausweisen. Wird er zur Kurvenfahrt eingelenkt, so müssen die Vorderräder eine größere Wegstrecke zurücklegen als die Hinterräder. Wenn die Räder aber im festen Verhältnis zu einander angetrieben werden, so ist es möglich, daß die Vorderräder langsamer angetrieben werden, als es ihrer Abrollgeschwindigkeit auf der Kurvenstrecke entspricht. Es tritt damit an den Vorderrädern ein Schubschlupf auf, der zu einer Verschlechterung des Fahrwerkwirkungsgrades führt, denn die Hinterräder müssen eine höhere Triebkraft aufbringen, um den Widerstand der Vorderräder zu überwinden. Werden die Vorderräder dagegen nicht angetrieben, sondern laufen nur frei mit, ist der Schubschlupf aufgrund der Rollreibung womöglich geringer und damit die aufzubringende Triebkraft der Hinterräder. Es ist daher sinnvoll, erneut zu überprüfen, ob der Fahrwerkwirkungsgrad bei Allradantrieb noch höher ist als der bei Hinterradantrieb.

In einer vorteilhaften Ausgestaltung der Erfindung können bei mehreren angetriebenen Achsen oder Allradantrieb die mittleren Achsantriebsgeschwindigkeiten in verschiedenen Verhältnissen zueinander geschaltet werden. Um dies wieder am obigen Beispiel zu verdeutlichen: ein Ackerschlepper mit Allradantrieb wird zur Kurvenfahrt eingelenkt. Die Vorderräder müssen eine größere Wegstrecke zurücklegen als die Hinterräder. Die Vorder- und Hinterräder werden zunächst im festen Verhältnis der Radumfangsgeschwindigkeiten von 1:1 zu einander angetrieben. Die Vorderräder werden langsamer angetrieben, als es ihrer Abrollgeschwindigkeit auf der längeren Kurvenstrecke entspricht. Es tritt damit an den Vorderrädern ein Schubschlupf auf, der zu einer Verschlechterung des Fahrwerkwirkungsgrades führt. Werden die Vorderräder dagegen schneller angetrieben als die Hinterräder, so wird ihrer längeren Spurlänge bei Kurvenfahrt Rechnung getragen. Ist das Verhältnis der Radumfangsgeschwindigkeiten der Vorder- zu Hinterräder größer als das der Bahngeschwindigkeiten, so treiben die Vorderräder wieder bei positivem Schlupf.

Vorteilhaft wird das Verhältnis der mittleren Radumfangsmaße der einzelnen Achsen wiederholt mittels Eichungen bestimmt. In die Ermittlung der Umfangsgeschwindigkeit der Räder über die Raddrehzahlmessung geht der Radumfang direkt proportional ein. Der Radumfang ist vom Reifenabrieb, Luftdruck im Reifen und Belastung des Reifens abhängig. Die Radumfangsgeschwindigkeit kann deshalb nur innerhalb dieser Genauigkeit bestimmt werden. Die Geschwindigkeit über Grund wird von den nicht getriebenen Rädern bestimmt, unter der Annahme, daß der Schlupf Null ist, d. h. der durch die Rollreibung verursachte Schubschlupf wird vernachlässigt. Die Geschwindigkeit des Fahrzeuges oder die der einzelnen Räder oder die mittlere Geschwindigkeit der Räder einer Achse wird dann unter Berücksichtigung der Geometrie und Lenkgeometrie des Fahrzeuges berechnet. Die Schlupfmessung und damit die Bestimmung der Triebkraft- und Rollreibungsbeiwerte und letztlich die Ermittlung des Fahrwerkwirkungsgrades erfolgt - wie oben beschrieben - durch Vergleich der Umfangsgeschwindigkeit der getriebenen und nicht getriebenen Achsen. Dabei kommt es aber nur auf Verhältnis, nicht auf den Absolutbetrag der Geschwindigkeiten an. Damit muß zur Ermittlung des Fahrwerkwirkungsgrades auch nur das Verhältnis, nicht auf der Absolutbetrag der Radumfangsmaße bekannt sein. Dieses Verhältnis kann mittels der Drehzahlsensoren ermittelt werden, für den Fall, daß an den getriebenen wie an den nicht getriebenen Rädern, die zur Ermittlung des Fahrwerkwirkungsgrades herangezogen werden, kein Schlupf auftritt. Es muß daher ein Betriebszustand erkannt werden, wo kein Schlupf auftritt. Die Grundidee ist dabei, daß, wenn Schlupf auftritt, dieser zeitlich veränderlich sein wird. Es ist nicht zu erwarten, daß ein konstanter Schlupfwert über eine gewisse Zeit aufrechterhalten sein wird. Das bedeutet, das Drehzahlverhältnis der getriebenen zu nicht getriebenen Rädern wird bei Schlupf ständig variieren. Ist es dagegen für eine gewisse Zeit konstant, kann man davon ausgehen, daß kein Schlupf auftritt. Sinnvollerweise wird diese Eichung des Verhältnisses der mittleren Radumfangsmaße bei Geradeausfahrt ohne Betätigung der Bremsen vorgenommen. Ändert sich der Wert dieses Verhältnisses unter diesen Bedingungen über eine vordefinierte Zeitspanne nicht über vorgegebene Toleranzen hinaus, so wird dieser Wert als neuer Eichwert gespeichert.

In einer anderen vorteilhaften Ausgestaltung der Erfindung wird das Verhältnis der mittleren Radumfangsmaße der einzelnen Achsen mittels Eichungen bestimmt, wobei der Fahrer die Zeitspanne angibt, in der Eichbedingungen erfüllt sind. Diese Bedingungen sind, ähnlich wie bei obigem Verfahren: nur eine Achse wird angetrieben, das Fahrzeug fährt geradeaus und die Bremsen werden nicht betätigt. Dabei wird der Schlupf der Räder wieder als Null angenommen. In dieser Zeitspanne wird das Verhältnis der mittleren Radumfangsmaße aus dem Verhältnis der mittleren Drehzahlen der Achsen untereinander bestimmt.

Vorzugsweise wird der aus den Lenkwinkelsensoren ermittelte mittlere Lenkwinkel einer Lenkachse durch den aus den Raddrehzahlverhältnis zwischen linkem und rechtem Rad dieser Achse ermittelte Lenkwinkel überprüft. Der über das Raddrehzahlverhältnis zwischen linkem und rechtem Rad ermittelte Lenkwinkel ist im allgemeinen der genauere Wert. Vorraussetzung ist dabei aber wieder, daß bei den gelenkten Rädern kein Schlupf auftritt. Sinnvollerweise dürfen die Räder nicht angetrieben oder gebremst werden.

Vorzugsweise werden die zusätzlichen Antriebsachsen erst zugeschaltet, wenn das Zuschaltkriterium eine vordefinierte Mindestzeit lang gültig bleibt oder der zeitliche Abstand zwischen zwei Zeitpunkten mit gültigem Zuschaltkriterium kleiner ist als ein vorgegebenes Mindestzeitintervall. Anderenfalls würde in einem Grenzbereich, in dem der Fahrwerkwirkungsgrad von Hinterrad- und Allradantrieb nahezu gleich ist, ständig zwischen Hinterrad- und Allradantrieb hin und hergeschaltet werden, was den Fahrkomfort sehr beeinträchtigen würde.

Vorteilhafterweise werden die zusätzlichen Antriebsachsen zugeschaltet, wenn die Betriebsbremse betätigt wird. Auf diese Weise wird für ein Fahrzeug ohne Mittendifferential verhindert, daß nur die nicht zugeschalteten Antriebsachsen oder nur die ständig angetriebenen Antriebsachsen blockieren. Die Bremswirkung der Achsen wird in der Regel gleichmäßiger verteilt.

Vorzugsweise werden die zusätzlichen Antriebsachsen abgeschaltet, wenn eine Lenkbremse betätigt wird. Dies ist sinnvoll, wenn die Lenkachse angetrieben wird, da sonst gegen der Antrieb gegen die Bremse wirkt.

In einer vorteilhaften Ausgestaltung der Erfindung erfolgt die Zuschaltung des Allradantriebs nur in einem Geschwindigkeitsbereich unterhalb von ungefähr 15 km/h, wobei dieser Bereich bei Beschleunigungen des Fahrzeuges bis ungefähr 17 km/h und bei Verzögerungen bis ungefähr 13 km/h reicht. Anderenfalls hätte ein plötzliches Schalten negative Auswirkungen auf das Fahrverhalten. Beim Bremsen sollte allerdings diese Einschränkung nicht gelten und der Allradantrieb zuschalten.

**Patentansprüche**

1. Antriebssteuerung für Kraft- oder Nutzfahrzeuge mit mindestens einer angetriebenen Achse und mindestens einer weiteren zuschaltbaren Antriebsachse, mit mindestens zwei Drehzahlsensoren an einer gelenkten Achse und mindestens einem Drehzahlsensor an einer angetriebenen Achse und einer elektronischen Steuereinheit dadurch gekennzeichnet, daß

   - wahlweise oder in Kombination der Lenkwinkel einerseits aus den Raddrehzahlverhältnissen der gelenkten Achse bei nicht zugeschaltetem Antrieb andererseits über einen Lenkwinkelsensor bestimmt wird
   - und über den Lenkwinkel das theoretische Verhältnis der Radumfangsgeschwindigkeiten ohne Schlupf der einzelnen Achsen untereinander bestimmt wird
   - und aus dem Vergleich mit den über die Drehzahlsensoren bestimmten tatsächlichen Umfangsgeschwindigkeiten der Räder der angetriebenen und nicht angetriebenen Achsen der Schlupf an der oder den angetriebenen Achsen bestimmt wird
   - und aus dem Schlupf über in der elektronischen Steuereinheit abgelegte Kennlinien der Triebkraftbeiwert und der Rollreibungsbeiwert ermittelt wird
   - und aus diesen Beiwerten, dem Lenkwinkel, der vorgegebenen oder gemessenen Achslastverteilung und dem Schlupf der Fahrwerkwirkungsgrad bei dieser oder diesen ständig angetriebenen Achsen über eine einem physikalischen Modell entsprechende mathematische Beziehung errechnet wird
   - und über eine weitere mathematische Beziehung und weitere Kennlinien der Fahrwerkwirkungsgrad bei Antrieb durch einesteils diese ständig angetriebene Achse oder ständig angetriebenen Achsen und anderesteils einer oder mehreren weiteren zugeschalteten Triebachsen berechnet wird, wobei der in diese Berechnung eingehende Gesamtschlupfwert und die Triebkraft- und Rollreibungsbeiwerte
   - aus den Kennlinien unter der Bedingung "gleiche Zugkraft bei Antrieb durch die ständig angetriebene Achse oder Achsen wie bei Antrieb mit einer oder mehrerer zusätzlich zugeschalteten Triebachsen" ermittelt wird
   - und als Zuschaltkriterium für die zusätzliche oder zusätzlichen Triebachsen das Verhältnis der errechneten Fahrwerkwirkungsgrade herangezogen wird, wobei
   - für positiven Schlupf das Zuschaltkriterium ein Quotient der Fahrwerkwirkungsgrade von einerseits mit zugeschalteter oder zugeschalteten Triebachsen andererseits ohne zugeschaltete Triebachsen von größer gleich 1
   - und für negativen Schlupf das Zuschaltkriterium ein Quotient der Fahrwerkwirkungsgrade von einerseits mit zugeschalteter oder zugeschalteten Triebachsen andererseits ohne zugeschaltete Triebachsen von kleiner 1 ist.

2. Antriebssteuerung nach Anspruch 1,
dadurch gekennzeichnet, daß
die Hinterachse ständig angetrieben wird und die Vorderachse als Triebachse zugeschaltet werden kann, wobei für den Fahrwerkwirkungsgrad bei Hinterradantrieb für positiven Schlupf die mathematische Beziehung

$$\eta_H = \frac{\kappa_{h\_H} - s\rho_v \dfrac{F_{Gv}}{F_{Gh}}}{\kappa_{h\_H} + \rho_{h\_H}} * (1 - i_H)$$

und für den Fahrwerkwirkungsgrad bei Allradantrieb für positiven Schlupf die mathematische Beziehung

$$\eta_A = \frac{\kappa_{h\_A} + s\kappa_{v\_A} \dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * (1 - i_A)$$

gilt und für negativen Schlupf die Beziehungen

$$\eta_H = \frac{\kappa_{h\_H} - s\rho_v \dfrac{F_{Gv}}{F_{Gh}}}{\kappa_{h\_H} + \rho_{h\_H}} * \frac{1}{1 + i_H}$$

bei Hinterradantrieb und

$$\eta_A = \frac{\kappa_{h\_A} + s\kappa_{v\_A} \dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * \frac{1}{1 + i_A}$$

bei Allradantrieb
gelten,
mit

$\eta_H$     Fahrwerkwirkungsgrad bei Hinterradantrieb
$\eta_A$     Fahrwerkwirkungsgrad bei Allradantrieb
$\kappa_{h\_H}$     Triebkraftbeiwert bei Hinterradantrieb
$\kappa_{h\_A}$     Triebkraftbeiwert der Hinterachse bei Allradantrieb
$\kappa_{v\_A}$     Triebkraftbeiwert der Vorderachse bei Allradantrieb
$s$     Verhältnis der mittleren Bahngeschwindigkeiten der Vorderräder und Hinterräder
$\rho_v$     Rollreibungsbeiwert der Vorderachse bei Hinterradantrieb
$\rho_{h\_H}$     Rollreibungsbeiwert der Hinterachse bei Hinterradantrieb
$\rho_{h\_A}$     Rollreibungsbeiwert der Hinterachse bei Allradantrieb
$F_{Gv}$     Vorderachsanteil der Gewichtskraft des Fahrzeuges
$F_{Gh}$     Hinterachsanteil der Gewichtskraft des Fahrzeuges
$i_H$     mittlerer Schlupf der Hinterräder des Fahrzeuges bei Hinterradantrieb
$i_A$     mittlerer Schlupf der Hinterräder des Fahrzeuges bei Allradantrieb

**e**  Verhältnis der mittleren Antriebsgeschwindigkeiten der Vorderräder und Hinterräder,

wobei das Verhältnis s der mittleren Bahngeschwindigkeiten der Vorderräder und Hinterräder über die Beziehung

$$s = \frac{1}{\cos\langle\delta_v\rangle}$$

bestimmt werden kann,

mit

$\langle\delta_v\rangle$  mittlerer Lenkwinkel der Räder der Vorderachse,

wobei der in die Formel für den Fahrwerkwirkungsgrad $\eta_H$ bei Hinterradantrieb eingehende mittlere Schlupf $i_H$ der Hinterräder gemessen wird und der bei Zuschaltung des Allradantriebs zu erwartende mittlerer Schlupf $i_A$ der Hinter- Räder des Fahrzeuges, der in die Formel für den Fahrwerkwirkungsgrad $\eta_A$ bei Allradantrieb eingeht, mittels der Bedingung "gleiche Zugkraft bei Hinterradantrieb wie bei Allradantrieb" über die entsprechende mathematische Beziehung

$$\kappa_{h\_A} + \kappa_{v\_A}\frac{F_{Gv}}{F_{Gh}} = \kappa_{h\_H} - s\rho_v\frac{F_{Gv}}{F_{Gh}}$$

berechnet wird, - und der Quotient

$$\frac{\eta_A}{\eta_H}$$

als Zuschaltkriterium des Allradantriebs herangezogen wird, wobei für $i_H > 0$   $\frac{\eta_A}{\eta_H} \geq 1$ gilt und für $i_H < 0$   $\frac{\eta_A}{\eta_H}$ < 1gilt.

3. Antriebssteuerung nach Anspruch 1 oder 2,
  dadurch gekennzeichnet, daß
  nach dem Zuschalten von einer oder mehreren weiteren Triebachsen nach einer definierten Zeit diese Achsen wieder aus dem Antriebsstrang abgeschaltet werden, um erneut zu überprüfen, ob das Zuschaltkriterium noch erfüllt ist.

4. Antriebssteuerung nach Anspruch 1 oder 2,
  dadurch gekennzeichnet, daß
  das Zuschaltkriterium erneut überprüft wird, wenn der Lenkwinkel sich um einen definierten Mindestbetrag ändert.

5. Antriebssteuerung nach Anspruch 1 oder 2,
  dadurch gekennzeichnet, daß
  bei mehreren angetriebenen Achsen oder Allradantrieb die mittleren Achsantriebsgeschwindigkeiten in verschiedenen Verhältnissen zueinander geschaltet werden können.

6. Antriebssteuerung nach Anspruch 1,
  dadurch gekennzeichnet, daß
  das Verhältnis der mittleren Radumfangsmaße der einzelnen Achsen wiederholt mittels Eichungen bestimmt wird, wobei nur eine Achse angetrieben wird und bei Geradeausfahrt ohne Betätigung der Bremsen das Verhältnis der mittleren Drehzahlen der einzelne Achse untereinander ermittelt wird und bei über einen bestimmten Zeitraum innerhalb einer Toleranzgenauigkeit konstantem Verhältnis der Schlupf der Räder als Null angenommen wird und unter dieser Annahme das Verhältnis der mittleren Radumfangsmaße aus dem Verhältnis der mittleren Drehzahlen der Achsen untereinander bestimmt wird.

7. Antriebssteuerung nach Anspruch 1,
  dadurch gekennzeichnet, daß

das Verhältnis der mittleren Radumfangsmaße der einzelnen Achsen mittels Eichungen bestimmt wird, wobei nur eine Achse angetrieben wird und Fahrer die Zeitspanne angibt, in der bei Geradeausfahrt ohne Betätigung der Bremsen der Schlupf der Räder als Null angenommen werden kann und in dieser Zeitspanne das Verhältnis der mittleren Radumfangsmaße aus dem Verhältnis der mittleren Drehzahlen der Achsen untereinander bestimmt wird.

8. Antriebssteuerung nach Anspruch 1,
dadurch gekennzeichnet, daß der aus den Lenkwinkelsensoren ermittelte mittlere Lenkwinkel einer Lenkachse durch den aus den Raddrehzahlverhältnis zwischen linkem und rechtem Rad dieser Achse ermittelte Lenkwinkel überprüft wird.

9. Antriebssteuerung nach Anspruch 8,
dadurch gekennzeichnet, daß
diese Überprüfung bei nicht angetriebener Lenkachse vorgenommen wird.

10. Antriebssteuerung nach Anspruch 1 oder 2,
dadurch gekennzeichnet, daß
die zusätzlichen Antriebsachsen erst zugeschaltet werden, wenn das Zuschaltkriterium eine vordefinierte Mindestzeit lang gültig bleibt oder der zeitliche Abstand zwischen zwei Zeitpunkten mit gültigem Zuschaltkriterium kleiner ist als ein vorgegebenes Mindestzeitintervall.

11. Antriebssteuerung nach Anspruch 1 oder 2,
dadurch gekennzeichnet, daß
die zusätzlichen Antriebsachsen zugeschaltet werden, wenn die Betriebsbremse betätigt wird.

12. Antriebssteuerung nach Anspruch 1 oder 2,
dadurch gekennzeichnet, daß
die zusätzlichen Antriebsachsen abgeschaltet werden, wenn eine Lenkbremse betätigt wird.

13. Antriebssteuerung nach Anspruch 1 oder 2,
dadurch gekennzeichnet, daß
die Zuschaltung des Allradantriebs nur in einem Geschwindigkeitsbereich unterhalb von ungefähr 15 km/h erfolgt, wobei dieser Bereich bei Beschleunigungen des Fahrzeuges bis ungefähr 17 km/h und bei Verzögerungen bis ungefähr 13 km/h reicht.

**Claims**

1. Drive controller for motor vehicles or commercial vehicles having at least one driven axle and at least one further connectable driving axle, having at least two rotational speed sensors at a steered axle and at least one rotational speed sensor at a driven axle and an electronic control unit
characterized in that

   - selectively or in combination the steering angle is determined, on the one hand, from the wheel rotational speed ratios of the steered axle while the drive is disconnected, on the other hand, by means of a steering angle sensor
   - and via the steering angle the theoretical interrelationship of the wheel peripheral speeds without slip of the individual axles is determined
   - and from the comparison with the actual peripheral speeds of the wheels of the driven and non-driven axles determined by means of the rotational speed sensors the slip at the driven axle or axles is determined
   - and from the slip by means of characteristic curves filed in the electronic control unit the coefficient of propulsion and the coefficient of rolling friction are determined
   - and from said coefficients, the steering angle, the preselected or measured axle load distribution and the slip the running gear efficiency for said constantly driven axle or axles is calculated by means of a mathematical relation corresponding to a physical model
   - and by means of a further mathematical relation and further characteristic curves the running gear efficiency given driving by, on the one hand, said constantly driven axle or axles and, on the other hand, one or more further connected live axles is calculated, wherein the total slip value included in said calculation and the coefficients of propulsion and rolling friction

- is determined from the characteristic curves with the proviso "equal traction for driving by means of the constantly driven axle or axles as for driving with one or more additionally connected live axles"
- and as a connection criterion for the additional live axle or axles the ratio of the calculated running gear efficiencies is used, wherein
- for positive slip the connection criterion is a quotient of the running gear efficiencies, on the one hand, with connected live axle or axles, on the other hand, without connected live axles of greater than/equal to 1
- and for negative slip the connection criterion is a quotient of the running gear efficiencies, on the one hand, with connected live axle or axles, on the other hand, without connected live axles of less than 1.

2. Drive controller according to claim 1,
characterized in that
the rear axle is constantly driven and the front axle may be connected as a live axle,
wherein for the running gear efficiency given rear wheel drive for positive slip the mathematical relation

$$\eta_H = \frac{\kappa_{h\_H} - s\rho_v \frac{F_{G_v}}{F_{Gh}}}{\kappa_{h\_H} + \rho_{h\_H}} * (1 - i_H)$$

applies and for the running gear efficiency given all-wheel drive for positive slip the mathematical relation

$$\eta_A = \frac{\kappa_{h\_A} + s\kappa_{v\_A} \frac{F_{Gv}}{F_{Gh}}}{\kappa_{h\_A} + \rho_{h\_A} + e\left(\kappa_{h\_A} + \rho_{h\_A}\right) \frac{F_{Gv}}{F_{Gh}}} * (1 - i_A)$$

applies
and for negative slip the relations

$$\eta_H = \frac{\kappa_{h\_H} - s\rho_v \frac{F_{G_v}}{F_{Gh}}}{\kappa_{h\_H} + \rho_{h\_H}} * \frac{1}{1 + i_H}$$

given rear wheel drive
and

$$\eta_A = \frac{\kappa_{h\_A} + s\kappa_{v\_A} \frac{F_{Gv}}{F_{Gh}}}{\kappa_{h\_A} + \rho_{h\_A} + e\left(\kappa_{h\_A} + \rho_{h\_A}\right) \frac{F_{Gv}}{F_{Gh}}} * \frac{1}{1 + i_A}$$

given all-wheel drive
apply,
with

| | |
|---|---|
| $\eta_H$ | running gear efficiency given rear wheel drive |
| $\eta_A$ | running gear efficiency given all-wheel drive |
| $\kappa_{h\_H}$ | coefficient of propulsion given rear wheel drive |
| $\kappa_{h\_A}$ | coefficient of propulsion of the rear axle given all-wheel drive |

$\kappa_{v\_A}$ coefficient of propulsion of the front axle given all-wheel drive
$s$ ratio of mean path velocities of the front wheels and rear wheels
$\rho_v$ coefficient of rolling friction of the front axle qiven rear wheel drive
$\rho_{h\_H}$ coefficient of rolling friction of the rear axle given rear-wheel drive
$\rho_{h\_A}$ coefficient of rolling friction of the rear axle given all-wheel drive
$F_{Gv}$ front axle component of force due to weight of the vehicle
$F_{Gh}$ rear axle component of force due to weight of the vehicle
$i_H$ mean slip of the rear wheels of the vehicle given rear wheel drive
$i_A$ mean slip of the rear wheels of the vehicle given all-wheel drive
$e$ ratio of the mean driving speeds of the front wheels and rear wheels,

wherein the ratios of the mean path velocities of the front wheels and rear wheels may be determined by means of the relation

$$ s = \frac{1}{\cos\langle\delta_v\rangle} $$

with

$\langle\delta_v\rangle$ mean steering angle of the wheels of the front axle,

wherein the mean slip $i_H$ of the rear wheels, which is included in the formula for the running gear efficiency $\eta_H$ given rear wheel drive, is measured and the mean slip $i_A$ of the rear wheels of the vehicle, which is to be anticipated given connection of the all-wheel drive and is included in the formula for the running gear efficiency $\eta_A$ given all-wheel drive, is calculated by means of the proviso "equal traction for rear wheel drive as for all-wheel drive" via the corresponding mathematical relation

$$ \kappa_{h\_A} + \kappa_{v\_A}\frac{F_{Gv}}{F_{Gh}} = \kappa_{h\_H} - s\rho_v\frac{F_{Gv}}{F_{Gh}} $$

- and the quotient

$$ \frac{\eta_A}{\eta_H} $$

is used as a connection criterion of the all-wheel drive, wherein for $i_H > 0$   $\frac{\eta_A}{\eta_H} \geq 1$   applies and for $i_H < 0$   $\frac{\eta_A}{\eta_H} < 1$   applies.

**3.** Drive controller according to claim 1 or 2,
characterized in that,
after the connecting of one or more further live axles, after a defined time said axles are disconnected again from the drive train in order to re-check whether the connection criterion is still met.

**4.** Drive controller according to claim 1 or 2,
characterized in that
the connection criterion is re-checked when the steering angle varies by a defined minimum amount.

**5.** Drive controller according to claim 1 or 2,
characterized in that,
given a plurality of driven axles or all-wheel drive, the mean axle driving speeds may be operated in various ratios to one another.

**6.** Drive controller according to claim 1,
characterized in that
the ratio of the mean wheel circumferential dimensions of the individual axles is repeatedly determined by means

**EP 0 936 978 B1**

of calibrations, wherein only one axle is driven and, while driving straight ahead without operating the brakes, the interrelationship of the mean rotational speeds of the individual axle is determined and, given a ratio which is constant over a specific time period within a tolerance accuracy, the slip of the wheels is assumed to be zero and on said assumption the ratio of the mean wheel circumferential dimensions is determined from the interrelationship of the mean rotational speeds of the axles.

**7.** Drive controller according to claim 1,
characterized in that
the ratio of the mean wheel circumferential dimensions of the individual axles is determined by means of calibrations, wherein only one axle is driven and the driver indicates the time interval during which, when driving straight ahead without operating the brakes, the slip of the wheels may be assumed to be zero and during said time interval the ratio of the mean wheel circumferential dimensions is determined from the interrelationship of the mean rotational speeds of the axles.

**8.** Drive controller according to claim 1,
characterized in that
the mean steering angle of a steering axle determined from the steering angle sensors is checked by means of the steering angle determined from the wheel rotational speed ratio between left and right wheel of said axle.

**9.** Drive controller according to claim 8,
characterized in that
said check is effected while the steering axle is not driven.

**10.** Drive controller according to claim 1 or 2,
characterized in that
the additional driving axles are connected only when the connection criterion remains valid for a predefined minimum time or the time interval between two instants with a valid connection criterion is shorter than a preselected minimum time interval.

**11.** Drive controller according to claim 1 or 2,
characterized in that
the additional driving axles are connected when the service brake is operated.

**12.** Drive controller according to claim 1 or 2,
characterized in that
the additional driving axles are disconnected when a steering brake is operated.

**13.** Drive controller according to claim 1 or 2,
characterized in that
the connection of the all-wheel drive is effected only in a speed range below approximately 15 kph, wherein said range extends, in the event of accelerations of the vehicle, to roughly 17 kph and, in the event of decelerations, to approximately 13 kph.

**Revendications**

**1.** Commande d'entraînement pour poids lourd ou véhicule utilitaire comportant au moins un axe entraîné et au moins un axe d'entraînement enclenchable auxiliaire, au moins deux détecteurs de nombre de tours montés sur un axe articulé et au moins un détecteur de nombre de tours monté sur un axe entraîné et une unité de commande électronique,
caractérisée en ce que

- l'angle de direction est déterminé sélectivement ou en combinaison, d'une part, selon le nombre de tours de roues de l'axe articulé lorsque l'axe d'entraînement auxiliaire n'est pas enclenché et, d'autre part, par l'intermédiaire d'un détecteur de l'angle de direction,
- et la vitesse périphérique théorique des roues, sans qu'il y ait glissement des axes individuels, est déterminée à partir de l'angle de direction,
- et le glissement à l'axe ou aux axes entraînés est déterminé à partir de la comparaison entre les vitesses périphériques effectives des roues des axes entraînés et des axes non entraînés par l'intermédiaire des détecteurs du nombre de tours,

- et la valeur de la puissance d'entraînement et la valeur de la friction de roulement sont déterminées à partir des courbes représentatives du glissement consignées par l'unité de commande électronique,

- et, pour ces valeurs, une condition mathématique correspondant à une modélisation physique est calculée pour l'angle de direction de la distribution prédéterminée ou mesurée des charges des axes et pour le glissement du degré d'efficacité de l'entraînement pour cet ou ces axes entraînés en permanence,

- et une autre condition mathématique et d'autres courbes représentatives du degré d'efficacité de l'entraînement sont calculées pour un entraînement réalisé, d'une part, au moyen dudit axe entraîné en permanence et, d'autre part, par un ou plusieurs axes d'entraînement auxiliaires enclenchés, dans laquelle la valeur globale du glissement, la valeur de la puissance d'entraînement et la valeur de la friction de roulement

- sont déterminées à partir des courbes représentatives sous la condition "force de traction constante pour un entraînement par l'axe ou les axes entraîné(s) en permanence avec un ou plusieurs axes d'entraînement auxiliaires entraînés",

- et la valeur calculée des degrés d'efficacité de l'entraînement est considérée comme un critère d'enclenchement du ou des axes d'entraînement auxiliaires

- et le critère d'enclenchement est un rapport du degré d'efficacité de l'entraînement d'une part avec un axe ou des axes auxiliaires enclenchés et d'autre part sans axe auxiliaire enclenché supérieur à 1 pour un glissement positif,

- et pour un glissement négatif, le critère d'enclenchement est un rapport inférieur à 1 du degré d'efficacité de l'entraînement, d'une part, avec un axe ou des axes auxiliaires enclenchés et, d'autre part, sans axes auxiliaires enclenchés.

**2.** Commande d'entraînement selon la revendication 1,
caractérisée en ce que
l'axe arrière est constamment entraîné et l'axe avant peut être enclenché comme axe d'entraînement auxiliaire, dans laquelle le degré d'efficacité de l'entraînement de l'axe arrière pour un glissement positif répond à la formule mathématique

$$\eta_H = \frac{\kappa_{h\_H} - s\rho_v \dfrac{F_{G_v}}{F_{Gh}}}{\kappa_{h\_H} + \rho_{h\_H}} * (1 - i_H)$$

et dans laquelle le degré d'efficacité pour un entraînement de tous les axes moteurs, pour un glissement positif, répond à la formule mathématique

$$\eta_A = \frac{\kappa_{h\_A} + s\kappa_{v\_A} \dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * (1 - i_A)$$

et pour un glissement négatif, la relation est

$$\eta_H = \frac{\kappa_{h\_H} - s\rho_v \dfrac{F_{G_v}}{F_{Gh}}}{\kappa_{h\_H} + \rho_{h\_H}} * \frac{1}{1 + i_H}$$

pour l'entraînement de l'axe arrière
et

$$\eta_A = \frac{\kappa_{h\_A} + s\kappa_{v\_A}\dfrac{F_{Gv}}{F_{Gh}}}{\kappa_{h\_A} + \rho_{h\_A} + e\left(\kappa_{h\_A} + \rho_{h\_A}\right)\dfrac{F_{Gv}}{F_{Gh}}} * \frac{1}{1+i_A}$$

pour tous les axes entraînés,

où

$\eta_H$    est le degré d'efficacité de l'entraînement pour un entraînement de l'axe arrière

$\eta_A$    est le degré d'efficacité de l'entraînement pour un entraînement de tous les axes

$\kappa_{h\_H}$    est la valeur de la force d'entraînement pour un entraînement par l'axe arrière

$\kappa_{h\_A}$    est la valeur de la force d'entraînement de l'axe arrière pour un entraînement par tous les axes

$\kappa_{v\_A}$    est la valeur de la force d'entraînement de l'axe avant pour un entraînement par tous les axes

$s$    est la valeur de la vitesse périphérique de la bande de roulement centrale des roues avant et des roues arrières

$\rho_v$    est la valeur de friction de roulement de l'axe avant pour un entraînement de l'axe arrière

$\rho_{h\_H}$    est la valeur de friction de roulement de l'axe arrière pour un entraînement de l'axe arrière

$\rho_{h\_A}$    est la valeur de friction de roulement de l'axe arrière pour un entraînement de tous les axes

$F_{Gv}$    est la part de l'axe avant de la charge du véhicule

$F_{Gh}$    est la part de l'axe arrière de la charge du véhicule

$i_H$    est le glissement moyen des roues arrières du véhicule pour un entraînement de l'axe arrière

$i_A$    est le glissement moyen des roues arrières du véhicule pour un entraînement de tous les axes

$e$    est la valeur de la vitesse d'entraînement moyen des roues avant et des roues arrières

dans laquelle la valeur s de la vitesse de la bande de roulement centrale des roues avant et des roues arrières peut être déterminée par la relation

$$s = \frac{1}{\cos\langle\delta_v\rangle}$$

$\langle\delta\rangle$    étant l'angle moyen de direction des roues de l'axe avant,

dans laquelle la valeur moyenne du glissement $i_H$ des roues arrières, telle qu'elle est déterminée par la formule donnant le degré d'efficacité de l'entraînement $\eta_H$ pour un entraînement de l'axe arrière, est mesurée et le glissement moyen prévisionnel $i_A$ des roues arrières du véhicule, au moment de l'enclenchement de toutes les roues, est calculé selon la formule donnant le degré d'efficacité de l'entraînement $\eta_A$ pour un entraînement de tous les axes, avec la condition "même force de traction pour l'entraînement par les roues arrières que pour l'entraînement toutes roues", au moyen de la relation mathématique

$$\kappa_{h\_A} + \kappa_{v\_A}\frac{F_{Gv}}{F_{Gh}} = \kappa_{h\_H} - s\rho_v\frac{F_{Gv}}{F_{Gh}}$$

et le rapport

$$\frac{\eta_A}{\eta_H}$$

est utilisé comme critère d'enclenchement de toutes les roues motrices où pour $i_H > 0$, on utilise $\dfrac{\eta_A}{\eta_H} \geq 1$ et pour $i_H < 0$, on utilise $\dfrac{\eta_A}{\eta_H} < 1$

3.   Commande d'entraînement selon la revendication 1 ou 2, caractérisée en ce que,

après l'enclenchement d'un ou de plusieurs axes d'entraînement, après un temps déterminé, ces axes sont à nouveau découplés de l'arbre d'entraînement pour permettre de vérifier à nouveau si les critères d'enclenchement sont encore respectés.

**4.** Commande d'entraînement selon la revendication 1 ou 2,
caractérisée en ce que
l'on vérifie à nouveau les critères d'enclenchement lorsque l'angle de direction est modifié d'une valeur minimale.

**5.** Commande d'entraînement selon la revendication 1 ou 2,
caractérisée en ce que,
pour plusieurs axes entraînés ou pour un entraînement de toutes les roues, les vitesses moyennes d'entraînement des axes peuvent être enclenchées selon des rapports variables.

**6.** Commande d'entraînement selon la revendication 1,
caractérisée en ce que
le rapport des mesures moyennes des périmètres des roues des axes individuels est déterminé de façon renouvelée au moyen de jauges lorsque seul un axe est entraîné et lorsque le véhicule se déplace en ligne droite sans actionnement des freins, en ce que la valeur des vitesses de rotation moyennes des axes individuels est déterminée, en ce que l'on admet que le glissement des roues est nul pendant un temps prédéterminé et avec une tolérance donnée, et en ce que, dans ces conditions, on déterminera la valeur du périmètre moyen des roues à partir de la valeur de la vitesse de rotation moyenne des axes entre eux.

**7.** Commande d'entraînement selon la revendication 1,
caractérisée en ce que
la valeur des périmètres des axes individuels est déterminée au moyen de jauges, un seul des axes étant entraîné et le conducteur indiquant un intervalle de temps, le glissement des roues étant considéré comme nul lorsque le véhicule se déplace en ligne droite sans que les freins ne soient activés, la valeur des périmètres moyens des roues étant déterminée à partir de la valeur moyenne de la vitesse de rotation des axes pendant cet intervalle de temps.

**8.** Commande d'entraînement selon la revendication 1,
caractérisée en ce que
la valeur de l'axe de direction moyen déterminé par les capteurs de direction d'un axe de direction est vérifiée en fonction de la valeur de l'angle de direction déterminé à partir du rapport des vitesses de rotation des roues gauche et droite de cet axe.

**9.** Commande d'entraînement selon la revendication 8,
caractérisée en ce que
cette vérification est faite alors que l'axe de direction n'est pas entraîné.

**10.** Commande d'entraînement selon la revendication 1 ou 2,
caractérisée en ce que
les axes d'entraînement auxiliaires ne sont enclenchés que lorsque le critère d'enclenchement reste valable pendant une période prédéterminée ou lorsque l'intervalle de temps entre deux instants où le critère d'enclenchement est vérifié est inférieur à un intervalle de temps prédéterminé.

**11.** Commande d'entraînement selon la revendication 1 ou 2,
caractérisée en ce que
les axes d'entraînement auxiliaires sont déclenchés lorsque le frein de service est activé.

**12.** Commande d'entraînement selon la revendication 1 ou 2,
caractérisée en ce que
les axes d'entraînement auxiliaires sont déclenchés lorsque le frein de direction est activé.

**13.** Commande d'entraînement selon la revendication 1 ou 2,
caractérisée en ce que
l'enclenchement de l'entraînement de toutes les roues n'intervient qu'à une vitesse approximativement inférieure à 15 km/h, cette vitesse pouvant atteindre environ 17 km/h au moment de l'accélération et environ 13 km/h au moment de la décélération.